# EUROPEAN PATENT APPLICATION

(11) **EP 3 978 559 A1**
(43) Date of publication of application: **06.04.2022**
(21) Application number: 20814883.3
(22) Date of filing: 28.05.2020
(51) Int. Cl.: C08K 5/06, C08K 5/17, C08L 21/00, C08K 3/013, C08K 3/36

(54) **ADDITIVE FOR RUBBER**

(30) Priority: 28.05.2019 JP 2019099445; 28.05.2019 JP 2019099462; 19.07.2019 JP 2019133503; 19.07.2019 JP 2019133504
(71) Applicant: Kao Corporation, Chuo-Ku Tokyo 103-8210 (JP)
(72) Inventor: KAWAHARA Hisaho, Wakayama-shi, Wakayama 640-8580 (JP); KAMENOUE Shogo, Wakayama-shi, Wakayama 640-8580 (JP)
(74) Representative: Hoffmann Eitle
(86) International application number: PCT/JP2020/021145
(87) International publication number: WO 2020/241765

(57) **Abstract**

The present invention is an additive for rubber comprising a compound represented by the following chemical formula (1): 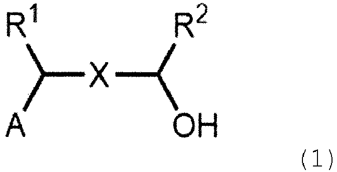 wherein each of R¹ and R² is an aliphatic hydrocarbon group with 1 or more and 33 or less carbons; a total number of carbons in R¹ and R² is 2 or more and 34 or less; X is a single bond or an aliphatic hydrocarbon group with 1 or more and 5 or less carbons; A represents -O-CH₂-CH (OH) -CH₂OH, -O-CH(-CH₂-OH)₂ or -N(R³) (R⁴); R³ is a hydrogen atom, a methyl group or a hydroxyalkyl group with 2 or more and 4 or less carbons; and R⁴ represents a hydroxyalkyl group with 2 or more and 4 or less carbons.

## Description

### Field of the Invention

The present invention relates to an additive for rubber, a rubber composition and a method for producing a rubber composition.

### Background of the Invention

While rubber is an amorphous and soft polymeric substance, it often refers to a material particularly composed mainly of an organic polymer such as natural rubber or synthetic rubber and having a high elastic limit and a low elastic modulus, that is, elastic rubber. Taking advantage of these properties, we utilize compositions containing rubber (rubber compositions) in various fields such as tires, sealing members, seismic-isolation/anti-vibration members and the like.

For example, in vehicles' tires, shock arising during vehicles are traveling on uneven roads is absorbed by the rubber elasticity of rubber, which thus plays a role in making vehicles' ride comfortable or buffering shock against vehicles themselves. In addition, being impervious to water and air, rubber can keep air tightly inside tires and also withstand rain or snow. Further, large friction caused by rubber makes friction between tires and road surfaces coming in contact therewith also large, thus enabling quick transmission of driving force and braking force to road surfaces to make them less slippery.

For making good use of such properties of rubber to obtain furthermore preferable performance, various additives are used for rubber. For example, rubber compositions for tires may sometimes be formulated with silica, which serves as a filler for improving low exothermicity, a gripping property on wet road surfaces, and the like. However, as silica particles tend to be flocculated with one another due to the hydrogen bonds in the silanol groups, which are a surface functional group thereof, a kneading time needs to be extended to make silica favorably dispersed in rubber. In addition, if silica is insufficiently dispersed in rubber, a rubber composition has a high Mooney viscosity and tends to be inferior in processability such as extrudability or the like. Further, as the surface of silica particles is acidic, a basic substance used as a vulcanization accelerator was adsorbed thereon to prevent a rubber composition from being sufficiently vulcanized, so that the storage modulus was sometimes not increased as expected. Therefore, conventionally, there have been needs for improvements in the processability and the like in rubber compositions formulated with silica.

For example, WO-A 2014/098155 discloses a rubber composition prepared by blending at least one rubber component selected from a natural rubber and/or a diene base synthetic rubber with silica and a glycerin fatty acid ester composition, wherein a blend amount of the glycerin fatty acid ester composition is 0.5 to 15 parts by mass based on 100 parts by mass of the rubber component; the fatty acid has 8 to 28 carbon atoms; the glycerin fatty acid ester composition comprises glycerin fatty acid monoester and glycerin fatty acid diester; and a content of the glycerin fatty acid monoester in the glycerin fatty acid ester composition is 85% by mass or less.

WO-A 2012-070626 discloses a rubber composition prepared by compounding at least one rubber component selected from natural rubber and/or diene base synthetic rubbers with a white filler and at least one of predetermined monoalkanolamides.

JP-A 2001-72801 discloses a rubber composition prepared by formulating natural rubber and/or diene synthetic rubber with carbon black and a predetermined tertiary amine, wherein the formulation amount of the tertiary amine is 1 to 15 parts by weight relative to 100 parts by weight of the rubber.

### Summary of the Invention

The present invention provides an additive for rubber capable of reducing a viscosity of an unvulcanized rubber composition to improve processability, and a rubber composition excellent in processability and a method for producing the same.

The present invention relates to an additive for rubber containing a compound represented by the following chemical formula (1): 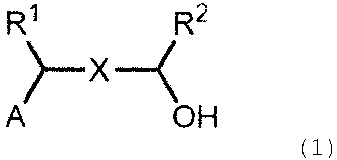 wherein each of R¹ and R² is an aliphatic hydrocarbon group with 1 or more and 33 or less carbons; a total number of carbons in R¹ and R² is 2 or more and 34 or less; X is a single bond or an aliphatic hydrocarbon group with 1 or more and 5 or less carbons; A represents -O-CH₂-CH(OH)-CH₂OH, -O-CH(-CH₂-OH)₂ or -N(R³)(R⁴); R³ is a hydrogen atom, a methyl group or a hydroxyalkyl group with 2 or more and 4 or less carbons; and R⁴ represents a hydroxyalkyl group with 2 or more and 4 or less carbons.

Further, the present invention relates to a rubber composition containing a rubber, a reinforcing filler and the additive for rubber of the present invention.

Further, the present invention relates to a method for producing a rubber composition including the following first and second kneading steps:
first kneading step: a step of mixing a rubber, a reinforcing filler and the additive for rubber of the present invention to obtain an unvulcanized rubber composition; and
second kneading step: a step of formulating and mixing the unvulcanized rubber composition with a vulcanizing agent and a vulcanization accelerator to obtain a vulcanized rubber composition.

Further, the present invention relates to a method for reducing a viscosity of an unvulcanized rubber composition including, a step of mixing the additive for rubber of the present invention, a rubber and a reinforcing filler.

Furthermore, the present invention relates to use of the additive for rubber of the present invention as an additive to a composition containing a rubber and a reinforcing filler.

Furthermore, the present invention relates to use of the additive for rubber of the present invention for reducing a viscosity of an unvulcanized rubber composition.

According to the present invention, provided is an additive for rubber capable of reducing a viscosity of an unvulcanized rubber composition to improve processability, and a rubber composition excellent in processability and a method for producing the same.

### Embodiments of the Invention

### [Additive for rubber]

An additive for rubber of the present invention contains a compound represented by the following chemical formula (1) [hereinafter also referred to as compound (1)].

In the present invention, it is inferred that, as a hydroxyl group or an amino group, which is a polar functional group of compound (1), is adsorbed onto the surface of a filler such as silica or the like, with which rubber compositions are commonly formulated, and an aliphatic hydrocarbon group of compound (1) exhibits a high affinity for rubber components, the filler has an improved dispersibility in rubber compositions and imparts smoothness to rubber components, thereby improving the processability of rubber compositions (reducing the Mooney viscosity). 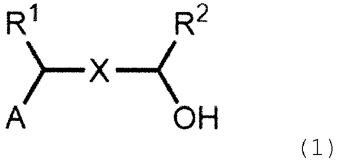 wherein each of R¹ and R² is an aliphatic hydrocarbon group with 1 or more and 33 or less carbons; a total number of carbons in R¹ and R² is 2 or more and 34 or less; X is a single bond or an aliphatic hydrocarbon group with 1 or more and 5 or less carbons; A represents -O-CH₂-CH(OH)-CH₂OH, -O-CH(-CH₂-OH)₂ or -N(R³)(R⁴); R³ is a hydrogen atom, a methyl group or a hydroxyalkyl group with 2 or more and 4 or less carbons; and R⁴ represents a hydroxyalkyl group with 2 or more and 4 or less carbons.

The present invention includes an additive for rubber containing compound (1) represented by the chemical formula (1), wherein compound (1) is a compound of the formula (1) in which A is -O-CH₂-CH(OH)-CH₂OH or - O-CH(-CH₂-OH)₂ (hereinafter also referred to as ether alcohol of the present invention).

In addition, the present invention includes an additive for rubber containing compound (1) represented by the chemical formula (1), wherein compound (1) is a compound of the formula (1) in which A is -N(R³)(R⁴), R³ is a hydrogen atom, a methyl group or a hydroxyalkyl group with 2 or more and 4 or less carbons, and R⁴ is a hydroxyalkyl group with 2 or more and 4 or less carbons (hereinafter also referred to as amino alcohol of the present invention).

The additive for rubber of the present invention can contain one or two or more types of compounds (1).

The present invention also encompasses an additive for rubber including as compound (1) ether alcohol of the present invention and amino alcohol of the present invention.

Each of R¹ and R² is an aliphatic hydrocarbon group with 1 or more and 33 or less carbons, preferably a linear or branched alkyl group and more preferably a linear alkyl group. The aliphatic hydrocarbon group may have substituents such as a hydroxy group, a ketone group, a carboxyl group, an aryl group, an alkoxy group and the like unless the effect of the present invention is hindered. R¹ and R² may be the same aliphatic hydrocarbon group or different aliphatic hydrocarbon groups. In addition, each of R¹ and R² has preferably 5 or less, more preferably 3 or less, further preferably 1 or less and furthermore preferably 0 substituents in R¹ and R² in total from the viewpoint of mixability with rubber.

The total number of carbons in R¹ and R² is 2 or more and 34 or less, and from the viewpoint of mixability with rubber, preferably 12 or more and more preferably 14 or more, and preferably 22 or less, more preferably 20 or less, further preferably 18 or less and furthermore preferably 16 or less. Note that, when each of R¹ and R² is an aliphatic hydrocarbon group having a substituent including carbon, a carbon atom bound thereto via an atom other than carbon from X in the chemical formula (1), for example, a carbon atom of methyl bound thereto via an oxygen atom of a "methoxy group" is not included in the total number of carbons in R¹ and R².

When A is -N(R³)(R⁴), R³ represents a hydrogen atom, a methyl group or a hydroxyalkyl group with 2 or more and 4 or less carbons, and R⁴ represents a hydroxyalkyl group with 2 or more and 4 or less carbons. R³ is preferably a hydrogen atom or a hydroxyalkyl group with 2 or more and 4 or less carbons and more preferably a hydroxyalkyl group with 2 or more and 4 or less carbons from the viewpoint of the effect of reducing a viscosity of an unvulcanized rubber composition. Each of the hydroxyalkyl groups of R³ and R⁴ has preferably 2 or more and 3 or less carbons and more preferably 2 carbons from the viewpoint of mixability with rubber.

X is a single bond or an aliphatic hydrocarbon group with 1 or more and 5 or less carbons, and from the viewpoint of mixability with rubber, preferably a single bond or an aliphatic hydrocarbon group with 1 or more and 3 or less carbons, more preferably a single bond or an aliphatic hydrocarbon group with 1 or more and 2 or less carbons, further preferably a single bond or an aliphatic hydrocarbon group with 1 carbon and furthermore preferably a single bond.

From the viewpoint of mixability with rubber, compound (1), for example, ether alcohol or amino alcohol of the present invention preferably includes two or more types of compounds, wherein X is a single bond or an aliphatic hydrocarbon group with 1 or more and 3 or less carbons, the compounds are the same in total number of carbons in R¹ and R², and R¹ and R² are different from each other in number of carbons.

From the viewpoint of mixability with rubber, compound (1), for example, ether alcohol or amino alcohol of the present invention more preferably includes two or more types of compounds, wherein X is a single bond or an aliphatic hydrocarbon group with 1 or more and 2 or less carbons, the compounds are the same in total number of carbons in R¹ and R², and R¹ and R² are different from each other in number of carbons.

From the viewpoint of mixability with rubber, compound (1), for example, ether alcohol or amino alcohol of the present invention further preferably includes two or more types of compounds, wherein X is a single bond or an aliphatic hydrocarbon group with 1 carbon, the compounds are the same in total number of carbons in R¹ and R², and R¹ and R² are different from each other in number of carbons.

From the viewpoint of mixability with rubber, compound (1), for example, ether alcohol or amino alcohol of the present invention furthermore preferably includes two or more types of compounds, wherein X is a single bond, the compounds are the same in total number of carbons in R¹ and R², and R¹ and R² are different from each other in number of carbons.

When compound (1), for example, ether alcohol or amino alcohol of the present invention contains two or more types of compounds in which X is a single bond and which are different in total number of carbons in R¹ and R², from the viewpoint of mixability with rubber, the total content of a compound in which the total number of carbons in R¹ and R² is 14 or 16 is preferably 75 mass% or more, more preferably 85 mass% or more, further preferably 95 mass% or more and furthermore preferably 100 mass% in compound (1), for example, ether alcohol or amino alcohol of the present invention.

When the above X is an aliphatic hydrocarbon group, it is preferably a linear or branched alkyl group and more preferably a linear alkyl group from the viewpoint of mixability with rubber. In addition, another example of the aliphatic hydrocarbon group of the above X is a divalent hydrocarbon group such as an alkylene group (alkanediyl group).

When compound (1), for example, ether alcohol or amino alcohol of the present invention includes two or more types of compounds in which R¹ and R² are different from each other in number of carbons, from the viewpoint of mixability with rubber, the content proportion of a compound having R¹ with 5 or more carbons and R² with 5 or more carbons is preferably 10 mass% or more, more preferably 20 mass% or more and further preferably 30 mass% or more, and preferably 90 mass% or less, more preferably 80 mass% or less and further preferably 70 mass% or less in compound (1), for example, ether alcohol or amino alcohol of the present invention. The content proportion of the compound having R¹ with 5 or more carbons and R² with 5 or more carbons can be estimated from a double bond distribution of a raw material internal olefin when compound (1), for example, ether alcohol or amino alcohol of the present invention is produced by using an internal olefin as a raw material.

Compound (1), for example, ether alcohol or amino alcohol of the present invention has a melting point of preferably 30°C or less, more preferably 20°C or less and further preferably 10°C or less from the viewpoint of mixability with rubber. In addition, it may be -200°C or more.

A method for producing ether alcohol of the present invention of compound (1) is not particularly limited, and it can be produced by, for example, oxidizing the double bond of an internal olefin compound with a peroxide such as hydrogen peroxide, performic acid, peracetic acid or the like to synthesize an internal epoxide, and reacting the resultant internal epoxide with glycerol. Note that the above ether alcohol obtained by the above producing method is a mixture of a plurality of compounds which are different in number of carbons in R¹ or R². In addition, a product obtained by the above producing method is usually a mixture of an ether alcohol in which A is -O-CH₂-CH(OH)-CH₂OH (hereinafter also referred to as ether alcohol 1) and an ether alcohol in which A is -O-CH(-CH₂-OH)₂ (hereinafter also referred to as ether alcohol 2).

A method for producing amino alcohol of the present invention of compound (1) is not particularly limited, and it can be produced by, for example, oxidizing the double bond of an internal olefin compound with a peroxide such as hydrogen peroxide, performic acid, peracetic acid or the like to synthesize an internal epoxide, and reacting the resultant internal epoxide with a primary or secondary alkanol amine. As the primary or secondary alkanol amine, an alkanol amine having a hydroxyalkyl group with 2 or more and 4 or less carbons can be used. Examples of the alkanol amine include monoethanolamine, N-methylethanolamine, diethanolamine, propanolamine (3-amino-1-propanol), dipropanolamine, isopropanolamine (1-amino-2-propanol), diisopropanolamine, 4-amino-1-butanol and the like. Note that the above amino alcohol obtained by the above producing method is preferably a mixture of a plurality of compounds which are different in number of carbons in R¹ or R².

In addition, regarding the method for producing amino alcohol of the present invention, reference may be made to, for example, a method described in JP-A 2013-543927.

An olefin used for producing ether alcohol of the present invention or amino alcohol of the present invention may contain, in addition to an internal olefin, an alpha-olefin. In that case, the content of the alpha-olefin included in the olefin is, for example, preferably 0.1 mass% or more and more preferably 0.2 mass% or more, and preferably 5 mass% or less, more preferably 3 mass% or less, further preferably 2 mass% or less, further preferably 1 mass% or less and further preferably 0.5 mass% or less, etc.

The additive for rubber of the present invention contains at least one type of compound (1).

The additive for rubber of the present invention contains, for example, at least one type of ether alcohol of the present invention.

The additive for rubber of the present invention may contain at least one type of the above ether alcohol 1 and at least one type of the above ether alcohol 2.

The additive for rubber of the present invention contains, for example, at least one type of amino alcohol of the present invention.

The additive for rubber of the present invention may contain at least one type of a compound of the formula (1) in which A is -N(R³)(R⁴) and R³ is a hydrogen atom and at least one type of a compound of the formula (1) in which A is -N(R³)(R⁴) and R³ is a hydroxyalkyl group with 2 or more and 4 or less carbons.

The total content of compound (1) in the additive for rubber of the present invention is not particularly limited to, but preferably 50 mass% or more, more preferably 60 mass% or more, further preferably 70 mass% or more, furthermore preferably 80 mass% or more and furthermore preferably 90 mass% or more from the viewpoint of obtaining the effect of the present invention. In addition, the upper limit of the content of compound (1) in the additive for rubber of the present invention is 100 mass%. In other words, compound (1) can also be used as-is as the additive for rubber.

When compound (1) is ether alcohol of the present invention, the total content of ether alcohol of the present invention in the additive for rubber of the present invention is not particularly limited to, but preferably 50 mass% or more, more preferably 60 mass% or more, further preferably 70 mass% or more, furthermore preferably 80 mass% or more and furthermore preferably 90 mass% or more from the viewpoint of obtaining the effect of the present invention. In addition, the upper limit of the content of ether alcohol of the present invention in the additive for rubber of the present invention is 100 mass%. In other words, ether alcohol of the present invention can also be used as-is as the additive for rubber.

When the additive for rubber of the present invention contains the above ether alcohol 1 and the above ether alcohol 2, the content of the above ether alcohol 1 relative to the total of the above ether alcohol 1 and the above ether alcohol 2 is preferably 1 mass% or more, more preferably 30 mass% or more, further preferably 40 mass% or more and furthermore preferably 50 mass% or more, and preferably 99 mass% or less, more preferably 90 mass% or less and further preferably 80 mass% or less from the viewpoint of obtaining high adsorptivity to a reinforcing filler. In addition, it is preferably 1 to 99 mass%, more preferably 30 to 99 mass%, further preferably 40 to 90 mass% and furthermore preferably 50 to 80 mass% from the same viewpoint.

When compound (1) is amino alcohol of the present invention, the total content of amino alcohol of the present invention in the additive for rubber of the present invention is not particularly limited to, but preferably 50 mass% or more, more preferably 60 mass% or more, further preferably 70 mass% or more, furthermore preferably 80 mass% or more and furthermore preferably 90 mass% or more from the viewpoint of obtaining the effect of the present invention. In addition, the upper limit of the content of amino alcohol of the present invention in the additive for rubber of the present invention is 100 mass%. In other words, amino alcohol of the present invention can also be used as-is as the additive for rubber.

The additive for rubber of the present invention may contain, in addition to compound (1), for example, ether alcohol of the present invention or amino alcohol of the present invention, for example, a vulcanizing agent such as sulfur or the like, a vulcanization accelerator such as zinc oxide or the like, a softening agent, stearic acid, an antioxidant, a solvent, water and the like in the ranges that the purpose of the present invention is not impaired.

### [Rubber composition]

A rubber composition of the present invention contains a rubber, a reinforcing filler and the additive for rubber of the present invention. The rubber composition of the present invention may be a rubber composition containing a rubber, a reinforcing filler and compound (1).

The present invention includes a rubber composition containing a rubber, a reinforcing filler and the additive for rubber of the present invention, wherein compound (1) is ether alcohol of the present invention.

In addition, the present invention includes a rubber composition containing a rubber, a reinforcing filler and the additive for rubber of the present invention, wherein compound (1) is amino alcohol of the present invention.

The rubber composition of the present invention can contain one or two or more types of compounds (1).

The present invention also encompasses a rubber composition including as compound (1) ether alcohol of the present invention and amino alcohol of the present invention.

From the viewpoint of processability, the content of the additive for rubber in the rubber composition of the present invention is preferably 0.1 parts by mass or more, more preferably 0.5 parts by mass or more, further preferably 1 part by mass or more and furthermore preferably 2 parts by mass or more relative to 100 parts by mass of the rubber. In addition, from the viewpoint of fracture properties of the rubber composition, the content of the additive for rubber in the rubber composition of the present invention is preferably 20 parts by mass or less, more preferably 15 parts by mass or less, further preferably 10 parts by mass or less, furthermore preferably 8 parts by mass or less and furthermore preferably 6 parts by mass or less relative to 100 parts by mass of the rubber.

Further, from the viewpoint of processability, the content of compound (1) in the rubber composition of the present invention is preferably 0.1 parts by mass or more, more preferably 0.5 parts by mass or more, further preferably 1 part by mass or more and furthermore preferably 2 parts by mass or more relative to 100 parts by mass of the rubber. In addition, from the viewpoint of fracture properties of the rubber composition, the content of compound (1) in the rubber composition of the present invention is preferably 20 parts by mass or less, more preferably 15 parts by mass or less, further preferably 10 parts by mass or less, furthermore preferably 8 parts by mass or less and furthermore preferably 6 parts by mass or less relative to 100 parts by mass of the rubber.

Further, when compound (1) is ether alcohol of the present invention, from the viewpoint of processability, the content of ether alcohol of the present invention in the rubber composition of the present invention is preferably 0.1 parts by mass or more, more preferably 0.5 parts by mass or more, further preferably 1 part by mass or more and furthermore preferably 2 parts by mass or more relative to 100 parts by mass of the rubber. In addition, from the viewpoint of fracture properties of the rubber composition, the content of ether alcohol of the present invention in the rubber composition of the present invention is preferably 20 parts by mass or less, more preferably 15 parts by mass or less, further preferably 10 parts by mass or less, furthermore preferably 8 parts by mass or less and furthermore preferably 6 parts by mass or less relative to 100 parts by mass of the rubber.

Further, when compound (1) is amino alcohol of the present invention, from the viewpoint of processability, the content of amino alcohol of the present invention in the rubber composition of the present invention is preferably 0.1 parts by mass or more, more preferably 0.5 parts by mass or more, further preferably 1 part by mass or more and furthermore preferably 2 parts by mass or more relative to 100 parts by mass of the rubber. In addition, from the viewpoint of fracture properties of the rubber composition, the content of amino alcohol of the present invention in the rubber composition of the present invention is preferably 20 parts by mass or less, more preferably 15 parts by mass or less, further preferably 10 parts by mass or less, furthermore preferably 8 parts by mass or less and furthermore preferably 6 parts by mass or less relative to 100 parts by mass of the rubber.

### <Rubber>

Examples of a rubber used in the rubber composition of the present invention include diene rubbers and further conjugated diene rubbers.

Examples of the diene rubbers include at least one selected from the group consisting of natural rubber (NR) and synthetic diene rubbers.

Specific examples of the synthetic diene rubbers include polybutadiene rubber (BR), synthetic polyisoprene rubber (IR), styrene-butadiene copolymer rubber (SBR), styrene-isoprene copolymer rubber (SIR) and the like.

The diene rubbers preferably include styrene-butadiene copolymer rubber from the viewpoint of reducing tan δ of the rubber composition, for example, to reduce the rolling resistance of tires using the same. The content of styrene-butadiene copolymer rubber in the diene rubbers is preferably 50 mass% or more, more preferably 70 mass% or more, further preferably 80 mass% or more and furthermore preferably 90 mass% or more from the above viewpoint. In addition, the upper limit of this content is 100 mass%.

These diene rubbers may be used alone or in combinations of two or more. In addition, the diene rubbers used may be modified or unmodified.

The content of a rubber in the rubber composition is preferably 30 mass% or more, more preferably 40 mass% or more and further preferably 50 mass% or more from the viewpoint of the development of physical properties derived from the rubber. In addition, it is preferably 90 mass% or less, more preferably 80 mass% or less and further preferably 70 mass% or less.

### <Reinforcing filler>

The rubber composition of the present invention further contains a reinforcing filler from the viewpoint of reinforcing mechanical physical properties of rubber to obtain a rubber composition exhibiting desired storage modulus and tan δ.

Examples of the reinforcing filler used in the rubber composition of the present invention include, for example, a carbon black, as well as organic and inorganic reinforcing fillers described later. These reinforcing fillers can be used alone or in combinations of two or more.

As the carbon black, any publicly-known carbon black having appropriately selected ranges of I₂ adsorption amount, CTAB specific surface area, N₂ adsorption amount, DBP adsorption amount and the like can be used as long as it improves the mechanical physical properties and the like. Examples of the carbon black are not particularly limited to, and include, for example, carbon blacks of GPF, FEF, HAF, ISAF and SAF grades. These carbon blacks may be used alone or in combinations of two or more.

Examples of the organic reinforcing filler include organic functionalized polyvinyl aromatic fillers described in WO-A 2006/069792 and WO-A 2006/069793, etc.

Examples of the inorganic reinforcing filler include, for example, at least one selected from silica, aluminum hydroxide, clay, talc, calcium carbonate and zeolites. From the viewpoint of obtaining a rubber composition exhibiting excellent storage modulus and tan δ, the inorganic reinforcing filler is preferably at least one selected from silica and aluminum hydroxide, and more preferably silica.

Examples of the silica are not particularly limited to, and include, for example, wet silica (hydrated silica), dry silica (silicic anhydride), calcium silicate, aluminum silicate and the like, and among these, wet silica is preferable from the viewpoint of availability. These silicas may be used alone or in combinations of two or more.

The rubber composition of the present invention preferably contains one or more selected from carbon black and silica and more preferably contains silica as the reinforcing filler. The content of silica in the reinforcing filler is preferably 60 mass% or more, more preferably 80 mass% or more and further preferably 85 mass% or more, and preferably 100 mass% or less and more preferably 95 mass% or less. In addition, the total content of carbon black and silica in the reinforcing filler is preferably 90 mass% or more, more preferably 95 mass% or more, further preferably 98 mass% or more and furthermore preferably substantially 100 mass%.

From the viewpoint of reinforcement, the content of the reinforcing filler in the rubber composition is preferably 1 part by mass or more, more preferably 5 parts by mass or more, further preferably 10 parts by mass or more, furthermore preferably 20 parts by mass or more, furthermore preferably 30 parts by mass or more and furthermore preferably 40 parts by mass or more relative to 100 parts by mass of the rubber. In addition, from the viewpoint of processability of the rubber composition, the content of the reinforcing filler in the rubber composition is preferably 120 parts by mass or less, more preferably 100 parts by mass or less and further preferably 80 parts by mass or less relative to 100 parts by mass of the rubber.

In the rubber composition of the present invention, the mass ratio of the content of the additive for rubber to the content of the reinforcing filler, (content of additive for rubber)/(content of reinforcing filler), is preferably 0.003 or more, more preferably 0.005 or more and further preferably 0.01 or more, and preferably 1 or less, more preferably 0.5 or less and further preferably 0.1 or less.

In addition, in the rubber composition of the present invention, the mass ratio of the content of compound (1) to the content of the reinforcing filler, (content of compound (1)/(content of reinforcing filler), is preferably 0.003 or more, more preferably 0.005 or more and further preferably 0.01 or more, and preferably 1 or less, more preferably 0.5 or less and further preferably 0.1 or less.

### <Coupling agent>

The rubber composition of the present invention preferably further contains a coupling agent in order to improve an effect obtained by formulating it with an inorganic reinforcing filler. The coupling agent is not particularly limited to, but preferably a silane coupling agent and more preferably a silane coupling agent containing a sulfur atom from the viewpoint of reactivity with the inorganic reinforcing filler.

Examples of the silane coupling agent containing a sulfur atom include, for example, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercapto propyldimethoxymethylsilane, dimethoxymethylsilylpropyl-N,N-dimethylthiocarbamoyl tetrasulfide, dimethoxymethylsilylpropylbenzothiazolyl tetrasulfide and the like. These coupling agents may be used alone or in combinations of two or more.

Among the above, bis(3-triethoxysilylpropyl)tetrasulfide is preferable.

From the viewpoint of reinforcement, the formulation amount of the coupling agent in the rubber composition is preferably 1 part by mass or more, more preferably 3 parts by mass or more and further preferably 5 parts by mass or more relative to 100 parts by mass of the inorganic reinforcing filler. In addition, from the viewpoint of reducing a component not contributing to a coupling reaction, it is preferably 25 parts by mass or less, more preferably 20 parts by mass or less and further preferably 15 parts by mass or less.

### <Other components, applications and others>

The rubber composition of the present invention may be formulated with, in addition to the aforementioned additive for rubber, rubber, reinforcing filler and coupling agent, formulation agents commonly used in rubber compositions, for example, a vulcanizing agent such as sulfur or the like, a vulcanization accelerator such as zinc oxide or the like, a softening agent, stearic acid, an antioxidant and the like appropriately selected in the ranges that the purpose of the present invention is not impaired. Commercially available products can favorably be used as these components.

The rubber composition of the present invention can exhibit effects thereof particularly when used for tires. In other words, the rubber composition of the present invention can be used for tires or as a member for tires. A tire member for which it is favorably used is a tread or a tread base. The present invention can provide a tire using the rubber composition of the present invention.

The rubber composition of the present invention is used to produce an air-containing tire in the usual way. In other words, at a stage where the rubber composition of the present invention is unvulcanized, it is extruded, for example, into a tread member, which is laminationmolded in the usual way on a tire molding machine to mold a green tire. This green tire is heated and pressurized in a vulcanization machine to obtain a tire.

The present invention is based on a finding that compound (1) can reduce a viscosity of an unvulcanized rubber to improve processability.

The present invention provides a method for reducing a viscosity of an unvulcanized rubber composition including, a step of mixing compound (1), a rubber and a reinforcing filler.

The present invention provides a method for reducing a viscosity of an unvulcanized rubber composition including, a step of mixing the additive for rubber of the present invention, a rubber and a reinforcing filler.

In addition, the present invention provides use of compound (1) as an additive to a composition containing a rubber and a reinforcing filler.

Moreover, the present invention provides use of the additive for rubber of the present invention as an additive to a composition containing a rubber and a reinforcing filler.

Further, the present invention provides use of compound (1) for reducing a viscosity of an unvulcanized rubber composition.

Furthermore, the present invention provides use of the additive for rubber of the present invention for reducing a viscosity of an unvulcanized rubber composition.

Furthermore, the present invention provides use of compound (1) as an additive for rubber.

Furthermore, the present invention provides use as a rubber composition of a composition containing a rubber, a reinforcing filler and compound (1).

The matters mentioned in the additive for rubber and rubber composition of the present invention can be appropriately applied to these methods and uses.

### [Method for producing rubber composition]

A method for producing a rubber composition of the present invention is not particularly limited. A kneading machine such as, for example, a banbury mixer, a roll, an intensive mixer or the like can be used to formulate and mix each of the components to be contained in the rubber composition.

From the viewpoints of suppressing the occurrence of vulcanization during production of the rubber composition and improving handleability during production, the rubber composition is preferably produced by a method including, formulating and mixing in advance components other than a vulcanizing agent and a vulcanization accelerator in the components to be contained in the rubber composition (first kneading step), and then, formulating and mixing therewith the vulcanizing agent and the vulcanization accelerator (second kneading step). In other words, the present invention provides a method for producing a rubber composition including the following first and second kneading steps. The matters mentioned in the additive for rubber and rubber composition of the present invention can be appropriately applied to the producing method of the present invention. The content or formulation amount of each component in the rubber composition of the present invention can be read and applied as a mixing amount (mixing amount relative to all the materials mixed) in the producing method of the present invention.

First kneading step: a step of mixing a rubber, a reinforcing filler and the additive for rubber of the present invention to obtain an unvulcanized rubber composition

Second kneading step: a step of formulating and mixing the unvulcanized rubber composition with a vulcanizing agent and a vulcanization accelerator to obtain a vulcanized rubber composition

The present invention includes a method for producing a rubber composition including the aforementioned first and second kneading steps, wherein compound (1) in the additive for rubber of the present invention used in the first kneading step is ether alcohol of the present invention.

Moreover, the present invention includes a method for producing a rubber composition including the aforementioned first and second kneading steps, wherein compound (1) in the additive for rubber of the present invention used in the first kneading step is amino alcohol of the present invention.

In the method for producing a rubber composition of the present invention, the composition can be mixed with one or two or more types of compounds (1).

The present invention also encompasses a method for producing a rubber composition including the aforementioned first and second kneading steps, wherein ether alcohol of the present invention and amino alcohol of the present invention are mixed as compound (1) in the additive for rubber of the present invention used in the first kneading step.

This method enables production of the rubber composition of the present invention in a productive manner as it prevents vulcanization from occurring even if the first kneading step is carried out under a hightemperature condition. The first kneading step may be a step of mixing a rubber, a reinforcing filler and compound (1) to obtain an unvulcanized rubber composition.

A mixing temperature in the first kneading step falls within a range with the highest temperature of preferably 250°C or less, more preferably 200°C or less and further preferably 180°C or less from the viewpoint of suppressing thermal decomposition of each component. In addition, from the viewpoint of productivity, the mixing temperature in the first kneading step is preferably 100°C or more, more preferably 120°C or more and further preferably 140°C or more.

A mixing temperature in the second kneading step falls within a range with the highest temperature of preferably 150°C or less and more preferably 130°C or less from the viewpoint of suppressing the occurrence of vulcanization during mixing. In addition, from the viewpoint of productivity, the mixing temperature in the second kneading step is preferably 80°C or more and more preferably 100°C or more.

### Examples

### [Example 1 and comparative example 1]

### <Method for measuring double bond position in internal olefin>

A double bond position in an internal olefin produced as a raw material compound for an epoxide-glycerol ring-opening product was measured by gas chromatography (hereinafter abbreviated as GC). Specifically, after the olefin was reacted with dimethyl disulfide to form a dithionated derivative, each component was separated by GC. From each peak area, the double bond position in the internal olefin was determined. Note that apparatuses and analysis conditions used for the measurement are as follows.
GC apparatus: product name HP 6890 (manufactured by Hewlett-Packard Company)
Column: product name Ultra-Alloy-1HT capillary column 30 m×250 µm×0.15 µm (manufactured by Frontier Laboratories Ltd.)
Detector: flame ionization detector (FID)
Injection temperature: 300°C
Detector temperature: 350°C
Oven: 60°C (0 min)→2°C/min→225°C→20°C/min→350°C→350°C(5.2 min)

### <Method for measuring content ratio of constitutional isomers>

0.05 g of an epoxide-glycerol ring-opening product produced in each of example 1 and comparative example 1, 0.2 g of trifluoroacetic anhydride and 1 g of deuterated chloroform were mixed to carry out measurement with ¹H-NMR. The measurement conditions are as follows.
Nuclear magnetic resonance apparatus: Agilent 400-MR DD2, manufactured by Agilent Technologies Japan, Ltd.
Observation range: 6410.3 Hz
Data point: 65536
Measurement mode: Presat
Pulse width: 45°
Pulse delay time: 10 sec
Accumulation number of times: 128 times

### <Measurement of melting point of reaction product of internal epoxide and glycerol (additive)>

A high sensitivity differential scanning calorimeter (manufactured by Hitachi High-Tech Science Corporation, product name: DSC7000X) was used, and each additive was placed in a 70 *µ*L pan; and the temperature was raised from -60°C to 80°C at 2°C/min, and a temperature at the time when a difference in temperatures detected by a differential thermocouple relative to a temperature rising time was at the maximum peak was taken as the melting point.

### <Production of internal olefin>

### Production example A1

### (Production of 16-carbon internal olefin (C16 internal olefin))

7000 g (28.9 moles) of 1-hexadecanol (product name: KALCOL 6098, manufactured by Kao Corporation) and 700 g (10 wt% relative to the raw material alcohol) of γ-alumina (Strem Chemicals, Inc.) as a solid acid catalyst were prepared in a flask with a stirrer, in which the reaction was carried out for 32 hours while nitrogen was flowed (at 7000 mL/min) through the inside of the system at 280°C under stirring. The conversion rate of the alcohol and the purity of C16 olefin after the completion of the reaction were 100% and 99.6%, respectively. The resultant crude C16 internal olefin was transferred to a distillation apparatus and distilled at 136-160°C/4.0 mmHg, thereby obtaining C16 internal olefin with an olefin purity of 100%. A double bond distribution of the resultant C16 internal olefin was as follows: 0.2% at position C1, 15.8% at position C2, 14.5% at position C3, 15.7% at position C4, 17.3% at position C5, 16.5% at position C6, and 20.0% at positions C7 and C8 in total.

### Production example A2

### (Production of 18-carbon internal olefin (C18 internal olefin))

800 kg (3.0 kilomoles) of 1-octadecanol (product name: KALCOL 8098, manufactured by Kao Corporation) and 80 kg (10 wt% relative to the raw material alcohol) of the activated alumina GP-20 (MIZUSAWA INDUSTRIAL CHEMICALS, LTD.) as a solid acid catalyst were prepared in a reactor with a stirrer, in which the reaction was carried out for 16 hours while nitrogen was flowed (at 15 L/min) through the inside of the system at 280°C under stirring. The conversion rate of the alcohol and the purity of C18 olefin after the completion of the reaction were 100% and 98.7%, respectively. The resultant crude C18 internal olefin was transferred to a distillation apparatus and distilled at 163-190°C/4.6 mmHg, thereby obtaining C18 internal olefin with an olefin purity of 100%. A double bond distribution of the resultant C18 internal olefin was as follows: 0.3% at position C1, 13.3% at position C2, 12.6% at position C3, 13.9% at position C4, 14.8% at position C5, 13.7% at position C6, 12.6% at position C7 and 18.8% at positions C8 and C9 in total.

<Production of internal epoxide>

### Production example B1

### (Production of 16-carbon internal epoxide (C16 internal epoxide))

800 g (3.56 moles) of C16 internal olefin obtained in production example A1, 107 g (1.78 moles) of acetic acid (manufactured by FUJIFILM Wako Pure Chemical Corporation), 15.6 g (0.15 moles) of sulfuric acid (manufactured by FUJIFILM Wako Pure Chemical Corporation), 415.7 g (4.28 moles) of 35% hydrogen peroxide (manufactured by FUJIFILM Wako Pure Chemical Corporation) and 25.3 g (0.18 moles) of sodium sulfate (manufactured by FUJIFILM Wako Pure Chemical Corporation) were prepared in a flask with a stirrer and reacted for 4 hours at 50°C. After that, the temperature was raised to 70°C, at which the reaction was further carried out for 2 hours. After the reaction, the contents were allowed to separate into layers, from which the layer of water was removed, and the layer of oil was cleaned with ion exchange water, an aqueous saturated sodium carbonate solution (manufactured by FUJIFILM Wako Pure Chemical Corporation), an aqueous saturated sodium sulfite solution (manufactured by FUJIFILM Wako Pure Chemical Corporation) and a 1% saline solution (manufactured by FUJIFILM Wako Pure Chemical Corporation), and concentrated using an evaporator, thereby obtaining 820 g of C16 internal epoxide.

### Production example B2

### (Production of 18-carbon internal epoxide (C18 internal epoxide))

595 g (2.38 moles) of C18 internal olefin obtained in production example A2, 71.7 g (1.20 moles) of acetic acid (manufactured by FUJIFILM Wako Pure Chemical Corporation), 9.8 g (0.10 moles) of sulfuric acid (manufactured by FUJIFILM Wako Pure Chemical Corporation) and 324 g (4.00 moles) of 35% hydrogen peroxide (manufactured by FUJIFILM Wako Pure Chemical Corporation) were prepared in a flask with a stirrer and reacted for 4 hours at 50°C. After that, the temperature was raised to 80°C, at which the reaction was further carried out for 5 hours. After the reaction, the contents were allowed to separate into layers, from which the layer of water was removed, and the layer of oil was cleaned with ion exchange water, an aqueous saturated sodium carbonate solution (manufactured by FUJIFILM Wako Pure Chemical Corporation), an aqueous saturated sodium sulfite solution (manufactured by FUJIFILM Wako Pure Chemical Corporation) and ion exchange water, and concentrated using an evaporator, thereby obtaining 629 g of C18 internal epoxide.

### <Production of reaction product of internal epoxide and glycerol>

### Production example (I)

### [Production of additive 1 [reaction product of C16 internal epoxide and glycerol (16-carbon internal epoxide-glycerol ring-opening product)]]

2298 g (25.0 moles) of glycerol (manufactured by FUJIFILM Wako Pure Chemical Corporation) and 0.122 g (1.25 millimoles) of 98% sulfuric acid (manufactured by FUJIFILM Wako Pure Chemical Corporation) were prepared in a flask with a stirrer, and the temperature was raised to 130°C. Subsequently, 300 g (1.25 moles) of C16 internal epoxide obtained in production example B1 was added dropwise thereto for an hour, and then, the reaction was carried out for 8 hours at 130°C. A liquid obtained by this reaction, to which hexane was added, was rinsed with ion exchange water, and then concentrated under a reduced pressure using an evaporator, thereby obtaining 400 g of 16-carbon internal epoxide-glycerol ring-opening product (additive 1) with a melting point of -18°C. The resultant additive 1 included 73% by mass of ether alcohol 1 and 27% by mass of ether alcohol 2 of the above chemical formula (1) in which each of R¹ and R² includes an alkyl group with 1 to 13 carbons, the total number of carbons in R¹ and R² is 14, X is a single bond, and A is -O-CH₂-CH(OH)-CH₂OH for the former and -O-CH(-CH₂-OH)₂ for the latter. In addition, the content proportion of a compound having R¹ with 5 or more carbons and R² with 5 or more carbons was estimated at 37% by mass from the double bond distribution of the internal olefin used as a raw material.

### Production example (II)

### [Production of additive 2 [reaction product of C18 internal epoxide and glycerol (18-carbon internal epoxide-glycerol ring-opening product)]]

18-carbon internal epoxide-glycerol ring-opening product (additive 2) with a melting point of 1°C was obtained by the same producing method as in production example (I) except that 1.25 moles of C18 internal epoxide obtained in production example B2 was used instead of 1.25 moles of C16 internal epoxide obtained in production example B1. The resultant additive 2 included 72% by mass of ether alcohol 1 and 28% by mass of ether alcohol 2 of the above chemical formula (1) in which each of R¹ and R² includes an alkyl group with 1 to 15 carbons, the total number of carbons in R¹ and R² is 16, X is a single bond, and A is -O-CH₂-CH(OH)-CH₂OH for the former and -O-CH(-CH₂-OH)₂ for the latter. In addition, the content proportion of a compound having R¹ with 5 or more carbons and R² with 5 or more carbons was estimated at 45% by mass from the double bond distribution of the internal olefin used as a raw material.

### Production example C

### [Production of glycerol fatty acid ester 2]

450 g of glycerol and 694 g of stearic acid [manufactured by Kao Corporation, LUNAC S-98] were placed [at glycerol/fatty acid (molar ratio)=2.0] in a 1 L fourneck flask with a stirrer, a dehydration tube-cooling tube, a thermometer and a nitrogen introduction tube, to which 10 ppm of sodium hydroxide dissolved in a small amount of water was added as sodium, and the temperature was raised to 240°C for about 1.5 hours under stirring at 400 r/min while nitrogen was flowed through a space above the liquid at 100 mL/min. After the temperature reached 240°C, dehydration was carried out while the acid component was refluxed to the flask, and the reaction was carried out for 4 hours at that temperature.

Next, the reaction mixture was cooled to 170°C, at which state glycerol was distilled under a reduced pressure of 2.7 kPa or less, water vapor was further supplied thereto for 2 hours at 150°C and 2kPa, and then, adsorption filtering was carried out under pressure using Zeta Plus 30S (manufactured by Cuno Corporation), thereby obtaining a monoglyceride-containing composition.

### <Preparation and evaluation of rubber composition>

The first kneading step and the second kneading step were carried out in this order using a common banbury mixer to prepare rubber compositions with formulations shown in Table 1. Of the components in Table 1, components other than zinc oxide, sulfur and vulcanization accelerators 1 and 2 were kneaded in the first kneading step, and zinc oxide, sulfur and vulcanization accelerators 1 and 2 were kneaded in the second kneading step. Note that the highest rubber composition temperature in the first kneading step and that in the second kneading step were 150°C and 110°C, respectively.

The Mooney viscosity (unvulcanized rubber viscosity) of the resultant rubber compositions was measured in accordance with JIS K 6300-1:2001. The smaller a value of the Mooney viscosity is, the more favorable processability is. Table 1 shows processability as a relative value with reference to the Mooney viscosity of comparative example 1-1 with no additive added as 100.

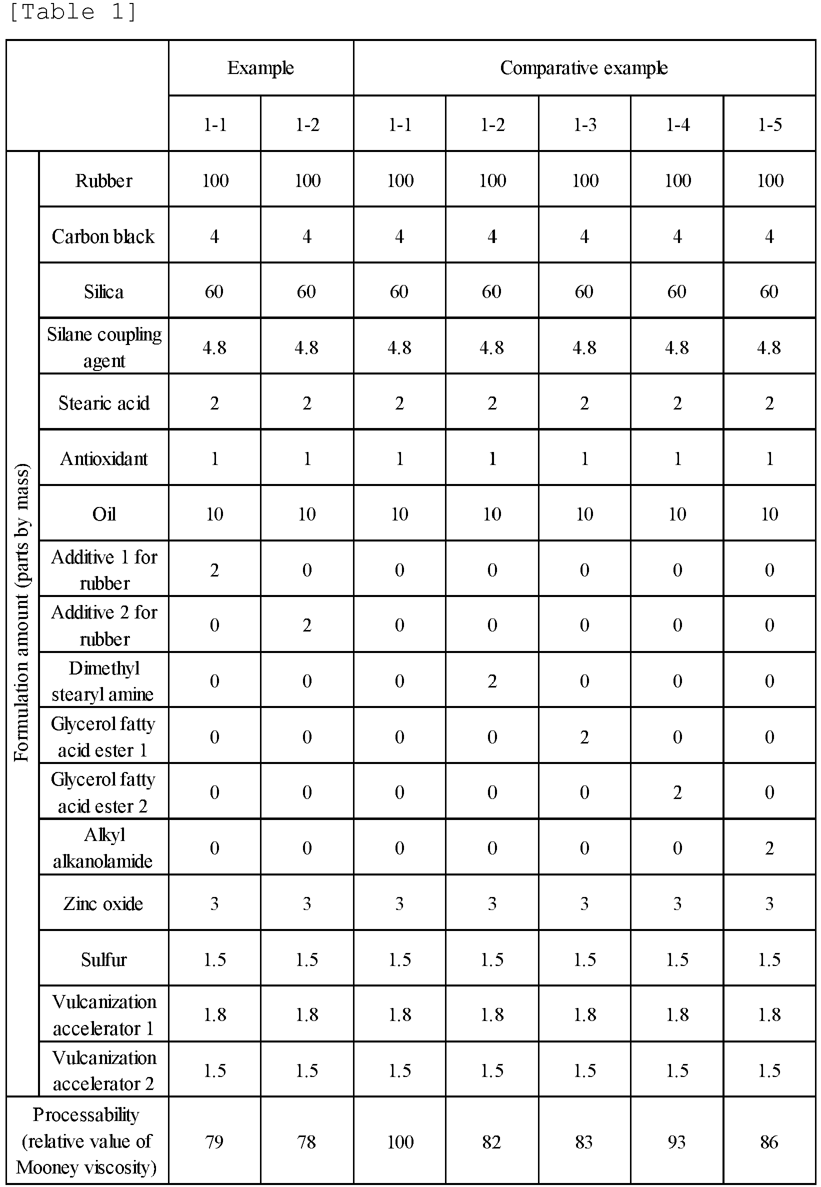

For details on each component shown in Table 1, see below.
- Rubber: styrene-butadiene copolymer rubber, manufactured by Zeon Corporation, emulsion polymerization SBR, product name "Nipol 1502"
- Carbon black: manufactured by TOKAI CARBON CO., LTD., product name "SEAST 3 (HAF)"
- Silica: manufactured by TOSOH SILICA CORPORATION, product name "Nipsil AQ"
- Silane coupling agent: bis(triethoxysilylpropyl)tetrasulfide, manufactured by Evonik Industries AG, product name "Si69"
- Stearic acid: manufactured by Kao Corporation, product name "LUNAC S-70V"
- Antioxidant: manufactured by Tokyo Chemical Industry Co., Ltd., N-(1,3-dimethylbutyl)-N'-phenyl-1,4-phenylenediamine
- Oil: manufactured by JAPAN SUN OIL COMPANY, LTD., SUNTHENE 410
- Additive 1 for rubber: 16-carbon internal epoxide-glycerol ring-opening product produced in production example (I)
- Additive 2 for rubber: 18-carbon internal epoxide-glycerol ring-opening product produced in production example (II)
- Dimethyl stearyl amine: manufactured by Kao Corporation, product name "FARMIN DM8098"
- Glycerol fatty acid ester 1: molecular distilled monoglyceride, manufactured by Kao Corporation, product name "EXCEL V95"
- Glycerol fatty acid ester 2: monoglyceride-containing composition obtained in production example C
- Alkyl alkanolamide: manufactured by Kao Corporation, product name "AMINON C-01," coconut oil fatty acid monoethanolamide
- Zinc oxide: manufactured by FUJIFILM Wako Pure Chemical Corporation
- Sulfur: manufactured by FUJIFILM Wako Pure Chemical Corporation
- Vulcanization accelerator 1: manufactured by FUJIFILM Wako Pure Chemical Corporation, N-cyclohexyl-2-benzothiazolesulfenamide
- Vulcanization accelerator 2: manufactured by FUJIFILM Wako Pure Chemical Corporation, 1,3-diphenylguanidine

### [Example 2 and comparative example 2]

### <18-carbon internal olefin (C18 internal olefin)>

C18 internal olefin produced in production example A2 was used.

### <18-carbon internal epoxide (C18 internal epoxide)>

C18 internal epoxide in production example B2 produced from the above C18 internal olefin was used.

### <Method for measuring content ratio of constitutional isomers>

Using 0.05 g of epoxide-di or monoethanolamine ring-opening product produced in example 2 or comparative example 2, the content ratio of constitutional isomers was measured in the same manner as in example 1.

### <Measurement of melting point of reaction product of internal epoxide and di or monoethanolamine (additive)>

The melting point of an additive was measured in the same manner as in example 1.

### <Production of reaction product of internal epoxide and diethanolamine (additive 3 for rubber)>

### Production example (III)

A reaction product of 18-carbon internal epoxide (C18 internal epoxide) produced in production example B2 and diethanolamine (additive 3 for rubber) was produced.

400 g (1.49 moles) of C18 internal epoxide obtained in production example B2 and 470 g (4.47 moles) of diethanolamine (manufactured by FUJIFILM Wako Pure Chemical Corporation) were prepared in a flask with a stirrer, and the temperature was raised to 160°C, at which the reaction was carried out for 20 hours. A liquid obtained by this reaction, to which hexane was added, was rinsed with ion exchange water, and then concentrated under a reduced pressure using an evaporator, thereby obtaining 530 g of amino alcohol as internal epoxide-diethanolamine ring-opening product (additive 3 for rubber). The resultant additive 3 for rubber had a melting point of -4°C. In addition, the resultant additive 3 for rubber is represented by the above chemical formula (1) in which each of R¹ and R² includes an alkyl group with 1 to 15 carbons, the total number of carbons in R¹ and R² is 16, X is a single bond, A is -N(R³)(R⁴), R³ is a hydroxyethyl group with 2 carbons, and R⁴ is a hydroxyethyl group with 2 carbons. Moreover, the content proportion of a compound having R¹ with 5 or more carbons and R² with 5 or more carbons was estimated at 45% by mass from the double bond distribution of the internal olefin used as a raw material.

### <Production of reaction product of internal epoxide and monoethanolamine (additive 4 for rubber)>

### Production example (IV)

A reaction product of 18-carbon internal epoxide (C18 internal epoxide) produced in production example B2 and monoethanolamine (additive 4 for rubber) was produced.

500 g (1.86 moles) of C18 internal epoxide obtained in production example B2 and 341 g (5.59 moles) of monoethanolamine (manufactured by FUJIFILM Wako Pure Chemical Corporation) were prepared in a flask with a stirrer, and the temperature was raised to 140°C, at which the reaction was carried out for 8 hours. A liquid obtained by this reaction, to which hexane was added, was rinsed with ion exchange water, and then concentrated under a reduced pressure using an evaporator, thereby obtaining 600 g of amino alcohol as internal epoxidemonoethanolamine ring-opening product (additive 4 for rubber). The resultant additive 4 for rubber had a melting point of 15°C. The resultant additive 4 for rubber is represented by the above chemical formula (1) in which each of R¹ and R² includes an alkyl group with 1 to 15 carbons, the total number of carbons in R¹ and R² is 16, X is a single bond, A is -N(R³)(R⁴), R³ is a hydrogen atom, and R⁴ is a hydroxyethyl group with 2 carbons. Moreover, the content proportion of a compound having R¹ with 5 or more carbons and R² with 5 or more carbons was estimated at 45% by mass from the double bond distribution of the internal olefin used as a raw material.

### <Preparation and evaluation of rubber composition>

The first kneading step and the second kneading step were carried out in this order in the same manner as in example 1 to prepare rubber compositions with formulations shown in Table 2. The Mooney viscosity (unvulcanized rubber viscosity) of the resultant rubber compositions was measured in the same manner as in example 1. Table 2 shows processability as a relative value with reference to the Mooney viscosity of comparative example 2-1 with no additive added as 100.

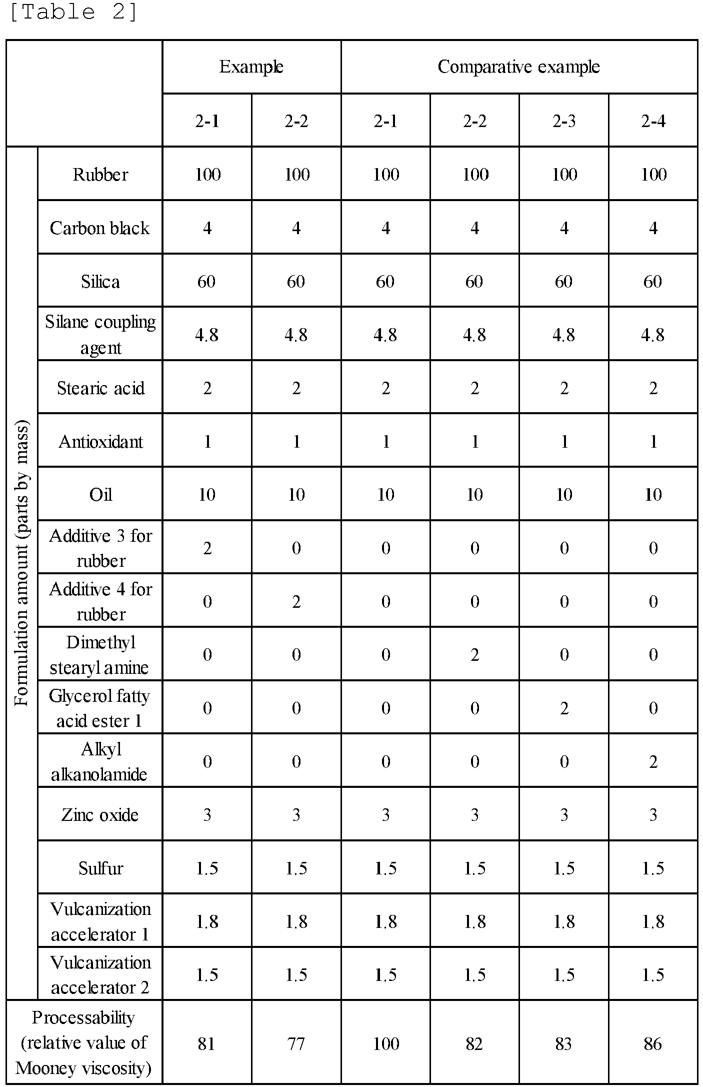

The components shown in Table 2 are the same as in Table 1, provided that additives 3 and 4 for rubber are as follows.
- Additive 3 for rubber: 18-carbon internal epoxide-diethanolamine ring-opening product produced in production example (III)
- Additive 4 for rubber: 18-carbon internal epoxidemonoethanolamine ring-opening product produced in production example (IV)

## Claims

1. An additive for rubber comprising a compound represented by the following chemical formula (1): 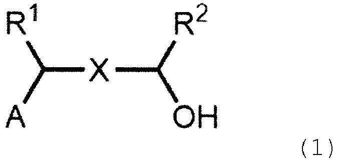 wherein each of R¹ and R² is an aliphatic hydrocarbon group with 1 or more and 33 or less carbons; a total number of carbons in R¹ and R² is 2 or more and 34 or less; X is a single bond or an aliphatic hydrocarbon group with 1 or more and 5 or less carbons; A represents -O-CH₂-CH (OH) -CH₂OH, -O-CH(-CH₂-OH)₂ or -N(R³)(R⁴); R³ is a hydrogen atom, a methyl group or a hydroxyalkyl group with 2 or more and 4 or less carbons; and R⁴ represents a hydroxyalkyl group with 2 or more and 4 or less carbons.

2. The additive for rubber according to claim 1, wherein X is a single bond in the compound represented by the chemical formula (1).

3. The additive for rubber according to claim 1 or 2, wherein the compound represented by the chemical formula (1) comprises a compound of the chemical formula (1) in which A is -O-CH₂-CH(OH)-CH₂OH (hereinafter referred to as ether alcohol 1) and a compound of the chemical formula (1) in which A is -O-CH(-CH₂-OH)₂ (hereinafter referred to as ether alcohol 2), wherein a content of the ether alcohol 1 is 1 mass% or more and 99 mass% or less relative to a total of the ether alcohol 1 and the ether alcohol 2.

4. A rubber composition comprising a rubber, a reinforcing filler and the additive for rubber according to any one of claims 1 to 3.

5. The rubber composition according to claim 4, wherein a content of the additive for rubber is 0.1 parts by mass or more and 20 parts by mass or less relative to 100 parts by mass of the rubber.

6. The rubber composition according to claim 4 or 5, wherein the reinforcing filler comprises silica.

7. The rubber composition according to any one of claims 4 to 6, wherein the rubber is a conjugated diene rubber.

8. The rubber composition according to any one of claims 4 to 7, wherein a mass ratio of a content of the additive for rubber relative to a content of the reinforcing filler, (content of additive for rubber)/(content of reinforcing filler), is 0.003 or more and 1 or less.

9. The rubber composition according to any one of claims 4 to 8, wherein the composition further comprises a coupling agent.

10. The rubber composition according to claim 9, wherein a content of the coupling agent is 1 part by mass or more and 25 parts by mass or less relative to 100 parts by mass of an inorganic reinforcing filler.

11. A method for producing a rubber composition comprising the following first and second kneading steps:
first kneading step: a step of mixing a rubber, a reinforcing filler and the additive for rubber according to any one of claims 1 to 3 to obtain an unvulcanized rubber composition; and
second kneading step: a step of formulating and mixing the unvulcanized rubber composition with a vulcanizing agent and a vulcanization accelerator to obtain a vulcanized rubber composition.

12. The method for producing a rubber composition according to claim 11, wherein the reinforcing filler comprises silica.

13. A method for reducing a viscosity of an unvulcanized rubber composition comprising, a step of mixing the additive for rubber according to any one of claims 1 to 3, a rubber and a reinforcing filler.

14. Use of the additive for rubber according to any one of claims 1 to 3 as an additive to a composition comprising a rubber and a reinforcing filler.

15. Use of the additive for rubber according to any one of claims 1 to 3 for reducing a viscosity of an unvulcanized rubber composition.
